(19) Europäisches Patentamt
European Patent Office
Office européen des brevets

(11) **EP 4 495 563 A1**

(12) **EUROPEAN PATENT APPLICATION**

(43) Date of publication:
**22.01.2025 Bulletin 2025/04**

(21) Application number: **23186741.7**

(22) Date of filing: **20.07.2023**

(51) International Patent Classification (IPC):
**G01K 7/42** (2006.01)   **G01K 15/00** (2006.01)
**G01K 13/02** (2021.01)   **G01K 1/143** (2021.01)

(52) Cooperative Patent Classification (CPC):
**G01K 7/427; G01K 1/143; G01K 13/02; G01K 15/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **GEBHARDT, Joerg**
**55130 Mainz (DE)**

• **SOSALE, Guruprasad**
**80997 München (DE)**
• **ACKERMANN, Patric**
**64405 Fischbachtal (DE)**
• **SCHROEDER, Karsten**
**32469 Petershagen (DE)**
• **DAAKE, Wilhelm**
**32469 Petershagen (DE)**
• **DASGUPTA, Subhashish**
**560066 Bangalore (IN)**

(74) Representative: **Maiwald GmbH**
**Engineering**
**Elisenhof**
**Elisenstrasse 3**
**80335 München (DE)**

(54) **METHOD FOR DETERMINING AN UNCERTAINTY RANGE FOR A MEASUREMENT VALUE OF A MODEL-BASED MEASURING DEVICE**

(57)     A method for determining an uncertainty range for a measurement value of a model-based measuring device (300) is described, including:

providing values of a plurality of parameters of a determination model of the model-based measuring device (300) for a specific measurement application of the measurement device (300) (S1);

providing an uncertainty range for at least one of the plurality of parameters (S2);

providing a sensor signal, which is detected according to the specific measurement application, for determining the measurement value (S3);

determining the uncertainty range (S4) of the measurement value for the specific application of the measurement device (300) based on the determination-model, the sensor signal, the values of the plurality of parameters of the determination model, and the uncertainty range for at least one of the plurality of parameters of the determination model.

Fig. 2

Fig. 3

EP 4 495 563 A1

**Description**

Background

Measurement of process parameters such as temperature, pressure etc. are all typically carried out by sensors systems. The measurement readings of these sensor systems are typically used to control or monitor a process involving a medium.

To ensure that the sensor systems accurately measure the parameters of the medium and accurately monitor changes of the state of the process, they are usually installed in intimate contact with the process medium.

There are state of the art sensor systems, often called non-invasive, that are mounted onto industrial vessels including sensor systems that can be used to infer process parameters without the need for direct contact with the medium, or at least without the need to break a wall of the process vessel or pipe for the installation, e.g. via drilling and perhaps subsequent welding. Devices such as ultrasonic flow sensors, surface mounted temperature sensors accurately measure properties of the medium. Temperature measurements are vital for safe running of facilities, because the temperature being the main control parameter for ensuring quality or efficiency of the process. Small deviations in temperature can lead to immense differences in energy or transactional costs given the volume of flow or material per second.

These sensors often require some basic properties of the process medium like density, viscosity, speed of sound, temperature and pressure range of the medium to be able to determine the property and/or to compensate for errors and get an accurate measurement.

Description

Non-invasive determination of the measurement value using a model-based measuring device can be close in performance to an invasive determination. In contrast to invasive methods non-invasive measurement techniques require a well-defined measurement application, particularly in respect to a mounting the non-invasive measuring device at the specific measurement side. Otherwise, the application of the non-invasive measuring device can lead to large errors of the measurement value.

If for a specific measurement application uncertainties of parameters, which are involved in a determination model of a non-invasive model-based determination of the measurement value are not known, it can be problematic to qualify the measurement method for the measurement application.

Furthermore, it could be useful during operation of the measuring device, to have a continuous information or an estimate of an uncertainty level of the determined measurement value.

Aspects of the present invention are related to a method for determining an uncertainty range for a measurement value, a model-based measuring device and a use of a model-based measuring device with subject matter as described in the independent claims.

Advantageous modifications of the invention are stated in the dependent claims. All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a method for determining an uncertainty range for a measurement value of a model-based measuring device. At a step of the method values of a plurality of parameters of a determination model of the model-based measuring device for a specific measurement application of the measurement device are provided to the measuring device. In a further step, an uncertainty range for at least one or each of the plurality of parameters of the determination model is provided to the measuring device. In a further step, preferably at least one, sensor signal, which is detected according to the specific measurement application, for determining the measurement value is provided to the measuring device. In a further step, the uncertainty range of the measurement value for the specific application of the measurement device is determined based on the determination-model of the model-based measuring device, and the sensor signal, and the values of the plurality of parameters of the determination model, and the uncertainty range for at least one or each of the plurality of parameters of the determination model. The uncertainty range of the measurement value can be calculated by combining the uncertainty ranges of the plurality of the parameters according to an error propagation concept.

The measuring device can be configured to receive the determination model, by means of an interface, and particularly by means of a handheld device, which is configured to provide a user interface.

The sensor signal can be detected based on a non-invasive measurement of a sensor unit. The sensor unit for providing the sensor signal can be a part of the measuring device and/or a separate unit.

The measuring device can comprise an interface for providing a specific measurement application, particularly by coupling the measuring device with a handheld device by means of the interface for providing a specific measurement application.

An uncertainty range can be an interval of a confidence in which the 'true' measurement value of a measurement is expected with a certain probability.

According to an aspect, a characterization of the specific measurement application comprise a vessel material and/or an identifier and/or name of a process fluid inside the vessel and/or a type of the process fluid and/or a density of the process fluid and/or vessel characterizing dimensions and/or a dynamic viscosity of the process fluid and/or a nominal temperature of the process fluid.

According to an aspect it is proposed, that the values of the plurality of parameters for specific measurement application of the measurement device are provided by a user interface, which is coupled to the measurement device.

The determination model can be a calculation model for establishing a relationship between the measurement value to be determined and the detected sensor signal for determining the measurement value, wherein particularly the relationship between the measurement value to be determined and the, preferably at least one, detected sensor signal can be expressed by an explicit formula.

The term 'vessel' can include any kind of wall enclosing the medium, as for instance a tube, a pipe or a tank or container etc.

The term 'medium' can be any fluid including a liquid and/or gas or any mixture of these and/or a mixture of a liquid and/or a gas and bulk material.

According to an aspect, the measuring device can be configured to provide the determined uncertainty range of the measurement value and/or the determined measurement value at an output of the measuring device, particularly by means of a handheld device for providing a user interface.

According to an aspect, the model-based measuring device can be configured to receive an estimated sensor signal for determining the uncertainty range of the measurement value upfront a measurement by means of a detected sensor signal. Particularly the estimated sensor signal can be provided to the measuring device by means of an interface, which can be coupled to a handheld device to provide a user interface.

The measurement value of the model-based measuring device can be a measurement value, which would require an invasive approach for a direct determination of the measurement value, as for instance a hole in a surface of the vessel.

The non-invasive determination of a temperature as the sensor signal temperature can be performed by means of a resistive temperature measurement device and/or a thermocouple used as a temperature sensing element, wherein the temperature sensing element is electrically connected to a sensor electronic for provision of a temperature sensor signal. The temperature-sensing element can be placed and/or mounted non-invasively at an outer surface of a vessel, wherein the temperature as the measurement value and/or the uncertainty range of the measurement value of the medium inside the vessel is to be determined.

A type of a phase of the medium within the vessel may be a liquid and/or a gas and/or a steam and/or a multiphase.

A type of the material of the vessel can be broadly classified into metallic, plastic or layered materials. Dimensions of the vessel, like a wall thickness and/or an inner diameter may be selected from standard dimensions.

Advantageously, the method can be implemented for any given model-based, and particularly non-invasive, measuring concept. This can be due to the fact that the measurement setup for a model-based measuring concept can be simpler than invasive ones, which can result in an analytically tractable model-based measuring approach.

Advantageously, the method can help to apply model-based, particularly non-invasive, measuring concepts correctly, during commissioning and during operation of the lifetime of the respective measuring device.

According to an aspect, in a further step of the method the measurement value of the model-based measurement device can be determined, based on the, preferably at least one, sensor signal, the determination-model, and the values of the plurality of parameters of the determination model for the specific measurement application.

According to an aspect, in a further step of the method at least one temperature value of one or several points within the environment of the measuring device can be detected by means of at least one environment temperature sensor of the measuring device for determining the uncertainty range of the measurement value.

According to a further aspect, the determination model can establish a relationship between the measurement value to be determined and the detected sensor signal for determining the measurement value.

According to an aspect it is proposed, that the relationship between the measurement value to be determined and the detected sensor signal can be expressed by an explicit formula.

As an example, a temperature inside of the vessel can be determined non-invasive by sensing a surface temperature of a wall of the vessel at a measuring site at the wall.

According to the model-based measuring concept a determination of a process temperature Tmedium can be a function of n temperature measurements Ti and a number m of parameters a_j, as described by formula (1):

$$\text{Tmedium} = f\left(T\_i, (i = 1, \ldots, n); \ a\_j, (j = 1, \ldots m)\right) \tag{1}$$

A typical case is given when by some means the surface temperature Ts of a pipe is measured as T1, and the ambient temperature Tamb is used as a second temperature measurement T2.

A determination of the medium temperature Tm can be calculated by a formula (2) approximately of the type

$$T_m = T_s + (T_s - T_{amb}) \frac{R_{bl} + R_w}{R_{ins} + R_{cr}} \tag{2}$$

Here, the parameters Ri are thermal resistances or corresponding parameters, like inverse thermal conductivities, particularly using cylindrical coordinates:
Rbl is the thermal resistance of the medium boundary layer adjacent to the inner surface of the vessel wall or pipe wall; Rw is the thermal resistance of the vessel wall or pipe wall; Rins is the thermal resistance of an insulation layer of the vessel or the pipe; and Rcr is the thermal resistance of conductive heat and convective heat transfer from an outside surface of the insulation to the surrounding medium, usually air (inverse film coefficient). Rcr can also include radiation effects.

The parameters Ri, can be calculated from more basic quantities which characterize the measurement point. These can include, e.g.:
Medium inside the vessel or pipe parameters:
Density $r_m$ (T); Dyn. Viscosity $h_m$ (T); Heat conductivity $k_f$ (T); Prandtl number $Pr_m$ (T); or heat capacity $c_{P\ m}$ (T).

Flow and boundary layer parameters:
Velocity $v_m$; Reynolds number, following from: $Re = (v_m\, D\, r_m) / h_m$

Insulation parameters:
Thickness $d_l$; Heat conductivity $k_l$ (T); Convection coefficient $h_3$; Emissivity of outer surface of insulation e.

Pipe parameters:
Diameter D; entry length (distance from nearest upstream flow disturbance) L; Wall thickness $d_w$; wall heat conductivity $k_w$ (T) (kappa); Paint layer thickness $d_p$; Paint layer conductivity Kp(w)

Typically the boundary layer inverse conductivity Rbl, , can be calculated by formula (3):

$$R_{bl} = \frac{D}{Nu_D\, \kappa_f} \tag{3}$$

Which is the definition of the Nußelt number, and which, in turn, can e.g. be calculated by a formula (4):

$$Nu_D^{turb} = \frac{(\xi/8) \cdot (Re - 1000) \cdot Pr}{1 + 12.7\sqrt{\xi/8}\left(Pr^{2/3} - 1\right)} \left[1 + \left(\frac{D}{L}\right)^{\frac{2}{3}}\right] \tag{4}$$

Other explicit formulae are known to a person skilled in the art. They can be different to formula (1-4), depending on the use case and thermo-hydrodynamical situation details. It has been found particularly beneficial that explicit formulae can be determined for relevant measurement applications, since in these cases, error margins and/or uncertainties of the parameters can be propagated through the model to find the error margin and/or uncertainty of the final result.

Advantageously, the determination model as described above for a non-invasive determination of the measurement value is structurally robust under the relevant varying parameters of applications, such as contact resistances, i.e. mounting variations.

Parameters of the determination model of the model-based measuring device can include material parameters of the medium or the vessel (e.g. pipe), geometry data, which are relevant for the model, as well known to a skilled person.

Also of interest are uncertainties of the primary and reference and any auxiliary (e.g. environmental or electronics/on printed circuit board temperature measurements.

Particularly, time stamp accuracies of these measurements can be a relevant parameter, in particular if they are used for derivative (rate of change) calculations of temperatures or other variables.

An uncertainty range of a parameter of the plurality of parameters of the determination model can be determined or estimated: Via experiments, simulations, as standard deviations or as maximal deviations etc.

The values of the plurality of parameters and/or the uncertainty range for at least one of the plurality of parameters and/or the specific measurement application of the measuring device can be provided by a dedicated menu by means of a user interface of a handheld device, which is coupled to the measuring device. The menu can have a well-known structure like a questionnaire or any other self-explaining menu.

According to an aspect, the model-based measuring device can be configured to determine the measurement value of a medium inside a vessel based on a non-invasive detected sensor signal.

The sensor signal can be detected non-invasive in respect to the vessel.

According to a further aspect, the sensor signal can be determined non-invasively at a measuring site outside of the vessel.

Preferably, the uncertainty range of the measurement value can be determined based on an error and/or uncertainty estimation model and on the determination model for the specific measurement application. Exemplary procedures can be found in the Guide to the Expression of Uncertainty in Measurement (GUM guideline).

Most preferably, the error estimation model can be based on a statistical method.

According to an aspect, the statistical method and/or the error estimation model can comprise a Gaussian error propagation and/or a Monte Carlo simulation.

E.g., a function describing the determination model can be differentiated accordingly and the effect of uncertainties of the parameters of the determination model can be derived from partial derivatives. Alternatively or additionally, the function describing the determination model may be tested by some Monte Carlo-type testing to determine the uncertainty range for the function f itself from varying input parameters.

The uncertainties of the parameters can also be based on a statistical evaluation of experiments, practical experience with the parameters, tabulated data, data sheet values, or on ad hoc estimations.

According to a further aspect at least one of the values of the plurality of parameters can be provided by a parameter-database; the parameter-database can comprise values of the plurality of parameters, which are assigned to specific measurement applications; and wherein particularly the measuring device can comprise the parameter-database and/or the measuring device can be configured to access the parameter-database by means of an Internet-coupling and/or a local network-coupling.

Alternatively or additionally, the values of the plurality of parameters can be provided by an interface of the measuring device. Particularly the interface can be configured to be coupled to a handheld device for providing the values of the plurality of parameters for providing a user interface.

According to an aspect, the uncertainty range of at least one of the plurality of parameters of a specific application of the measurement device is provided by the parameter-database. The parameter-database can comprise an estimated uncertainty range for at least one of for all of the plurality of parameters of a specific application of the measuring device.

According to an aspect, the measuring device can be configured to include predetermined a-priori parameters and/or uncertainty ranges of parameters of the determination model. The predetermined parameters and/or uncertainty ranges of parameters can comprise values from the literature including hydrodynamic model and correlation uncertainties, e.g. in experimental Nußelt number determination. Examples can be uncertainties of material constants like density or viscosity of the medium.

According to an aspect, the parameter-database can be updated by means of an Internet interface and/or a local network coupling of the uncertainty statements based on online collection of data.

The values of the plurality of parameters of the determination model and/or the uncertainty range for the plurality of parameters can be provided to the measuring device by means of a user interface including a menu for entering application-specific uncertainties during commissioning and/or also during lifetime and/or after maintenance and/or re-mounting and/or re-calibration etc.

The uncertainty range of the parameters can be provided as relative and/or absolute values. Particularly, the uncertainty range of the parameters can be set point - dependent and/or time dependent, for taking into account well-known drift behavior of at least one parameter and/or periodic changes of the parameter.

Particularly, the uncertainty ranges of the plurality of parameters can be updated regularly and/or provided by means of an online coupling of the measuring device, based on online provided information on the specific measurement application.

Furthermore, some qualitative, descriptive, features can be used to estimate uncertainties of corresponding parameters of the determination model.

Examples can include a presence of paint or liners inside or outside of the pipe wall surface or a vessel wall surface, and/or a presence of corrosion, and/or a perforated or partially opened insulation, and/or Information on indoor and/or outdoor application and respective weather influence from rain and/or snow.

The measuring device can be configured to include a common database and/or can be configured to be coupled to the common database by means of an Internet-coupling and/or a local network coupling, wherein the common database comprises the parameter-database and/or a model-database.

The estimated uncertainty ranges of the plurality of parameters can be predefined a priori uncertainties, based on literature values and/or experience of the user.

The uncertainty range of at least one of the plurality of parameters of a specific measurement application can be determined by invasive measurement techniques, particularly if an uncertainty range of a specific parameter is practically not available by a non-invasive measurement technique.

Preferably, the method can further comprise a determination of a most significant parameter and/or a second-ranked significant parameter of the plurality of parameters of the specific measurement application, which is based on the determination model, the most significant parameter and/or the second-ranked significant parameter having the most and/or respectively second significant influence on the uncertainty range of the measurement value for the specific measurement application of the measuring device.

Advantageously, identification of the most significant parameter can help to identify a parameter to pay the most attention to it.

There may be a graphical output, which parameters are most critical in the application at hand, and a recommendation for avoiding bad impact can be made.

A most significant parameter can be a parameter of the determination model having the highest impact on the resultant uncertainty range of the measurement value.

That can be a parameter for which a combination of its uncertainty range and of the sensitivity of the end result on this parameter, which can be determined based on the determination model, leads to a particularly large contribution to the uncertainty range of the measurement value. The combination can be can be calculated as the square root of the sum of squares of the individual contribution.

According to an aspect, the method can additionally provide, and/or the measuring device can be configured to provide, a contribution in respect to the uncertainty range of the measurement value of an uncertainty range of an individual parameter of the determination model, as originated by the respective parameter, and e.g. provided to a user or operator in form of a table or in form of a graphical representation. Particularly, a warning and/or a recommendation for improving the specific measurement application can be generated by the method or by means of the measuring device, if an uncertainty range of a specific parameter can be reduced.

Advantageously, it can be helpful for a user or operator to realize an individual contribution of an individual parameter.

According to an aspect, the measurement value can be a temperature value of a medium inside a vessel, and particularly the sensor signal can be based on a surface temperature of the vessel.

According to a further aspect, the determination model of a non-invasive temperature-measuring device can be based on model calculations of interrelationships of a plurality of thermal paths, which originate at a measurement point, which can be located at the surface of the vessel.

According to an aspect, the plurality of parameters can include a thermal resistance of a boundary layer of the medium inside the vessel, and/or a thermal resistance of the pipe wall, and/or the thermal resistance of an insulation layer of the vessel, and/or a convective heat transfer from an outside of the thermal insulation of the vessel to an environment medium, and/or a conductive heat transfer from the outside insulation surface of the vessel to the environment medium, and/or a radiative heat transfer from the outside insulation surface of the vessel to an environment of the insolation.

Particularly the sensor signal can determine a temperature of a surface of a vessel and the measurement value can determine a temperature value inside of the vessel.

According to an aspect, a model-based measuring device for determining a measurement value is proposed, wherein the model-based measuring device comprises a sensor unit, and a model-based base and/or a first interface and/or a second interface and/or a parameter-database and a computing unit.

The sensor unit can be configured for detecting a sensor signal for determining the measurement value, which is detected according to a specific measurement application. The model-database and/or the first interface can be configured for providing a determination model comprising a plurality of parameters according to the specific measurement application of the model-based measuring device. The second interface and/or the parameter-database can be configured for providing values of the plurality of parameters and an uncertainty range for at least one or each of the plurality of parameters of the specific application of the model-based measuring device according to the specific measurement application for the determination model. The computing unit can be configured to be signally coupled to the sensor unit for providing the sensor signal; and signally coupled to the model-database and/or coupled to the parameter-database and/or coupled to the first interface and/or coupled to the second interface for providing the determination model and the plurality of parameters respectively and the uncertainty range for at least one or each of the plurality of parameters. The model-based measuring device can be configured to determine an uncertainty range of a measurement value of the model-based measuring device.

Particularly, the model-based measuring device can be configured to determine the uncertainty range of the measurement value of the model-based measuring device according to the method for determining the uncertainty range of the measurement value and/or the measurement value as described above.

According to an aspect, the measuring device can comprise a temperature sensor for determining an environment temperature of the measuring device, particularly for determining the uncertainty range of the measurement value.

Particularly, the sensor unit can comprise a first sensing device and a second sensing device, and the sensor signal can be determined based on a measurement signal of the first sensing device and a measurement signal of the second device.

According to an aspect, it is proposed, that the measuring device can be configured to determine the measurement value. Particularly, the measuring device can comprise an output-interface for providing the measurement value and/or the uncertainty range of the measurement value. More particularly, the output-interface can be configured to be coupled to a handheld device to provide a user interface.

According to an aspect, the measuring device can be configured to comprise and/or to be coupled to a common interface comprising the first and/or the second and/or the third interface and/or other interfaces for communicating with the measuring device. Such a common interface can be provided for instance by a handheld device, which can be coupled to the measuring device.

According to an aspect, the model-based measuring device can be configured to determine the plurality of parameters based on the specific measurement application of the model-based measuring device, which is provided by an input-interface of the measuring device.

According to an aspect, the sensor signal can comprise a surface temperature of a wall of a vessel and the measuring device can be configured to determine the measurement value of a temperature of a medium inside of the vessel.

According to an aspect, the measuring device can be configured to generate a warning if predefined limits for the uncertainty range of the measurement value are exceeded. The measuring device and/or an interface of the measuring device can be configured with a user interface comprising optical signals according to traffic lights.

Additionally or alternatively, the uncertainty range of the measurement value can be provided to a diagnostic functionality of the measuring device.

According to an aspect the uncertainty range of a measurement value of the model-based measuring device can be used for calculation of a maintenance interval and/or for calibration and/or for verification of the measurement value.

A use of a model-based measuring device as described above is proposed, for determining a temperature of a medium inside of a vessel and an uncertainty range of the determined temperature of the medium inside of the vessel.

Brief description of the drawings

The accompanying drawings, which are included to provide a further understanding of the invention and are incorporated in and constitute a part of this application, illustrate embodiments of the invention and together with the description serve to explain the principle of the invention. The drawings display in:

Figure 1     sketches schematically a specific measurement application;
Figure 2     sketches schematically a method for determining an uncertainty range of a measurement value; and
Figure 3     sketches schematically a model-based measuring device.

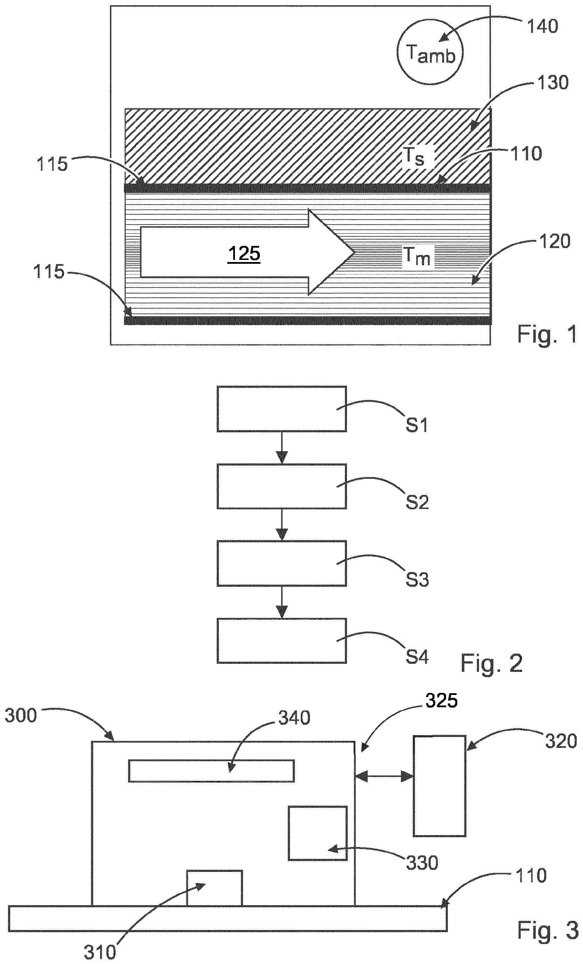

Figure 1 sketches schema a specific measurement application, wherein a medium 120 having a temperature Tm is flowing inside of a pipe 115 with a flow 125, and wherein the pipe 115 can be characterized by its dimension comprising a thickness of the pipe wall and the diameter of the pipe 115. A surface 110 of the pipe wall can have a temperature Ts, which can be detected non-invasive by a sensor unit for determining the temperature Tm of the medium, based on a determination model. The pipe 115 can be provided by an insulation layer 130 to reduce a heat flow from the surface of the tube 110 to and environment 140 of the insulation layer, respectively the tube 115. The environment 140 can be characterized by a temperature Tamb.

Figure 2 sketches schematically a method for determining an uncertainty range for a measurement value of a model-based measuring device. In a step S1 values of a plurality of parameters of a determination model of the model-based measuring device for a specific measurement application of the measurement device is provided to the measuring device. In a further step S2, an uncertainty range for at least one of the plurality of parameters is provided to the measuring device. In a further step S3 a sensor signal, which is detected according to the specific measurement application, for determining the measurement value is provided to the measuring device. In a further step S4 the uncertainty range of the measurement value for the specific application of the measurement device is determined based on the determination-model of the model-based measuring device, and the sensor signal, and the values of the plurality of parameters of the determination model, and the uncertainty range for at least one of the plurality of parameters of the determination model.

Figure 3 sketches schematically a model-based measuring device 300 for determining a measurement value, including a sensor unit 310, and a model-database 330, and an interface 325, and a computing unit 340, wherein the sensor unit 310 is arranged adjacent to a surface 110 of a vessel, wherein the vessel contains a process fluid with a temperature to be determined.

The sensor unit 310 for detecting a sensor signal is configured to provide the detected sensor signal for determining the measurement value of the medium according to a specific measurement application. The specific measurement application can comprise a vessel material and/or an identifier and/or name of a process fluid inside the vessel and/or a type of the process fluid and/or a density of the process fluid and/or vessel characterizing dimensions and/or a dynamic viscosity of the process fluid and/or a nominal temperature of the process fluid.

The model-database 330 of the measuring device 300 is configured for providing a determination model comprising a plurality of parameters according to the specific measurement application of the model-based measuring device 300.

The interface 325 is configured to be coupled to a handheld device 320 for providing values of the plurality of parameters and an uncertainty range for at least one or each of the plurality of parameters of the specific application of the model-based measuring device 300 according to the specific measurement application for the determination model. In addition, the computing unit 340 is signally coupled to the sensor unit 310 for providing the sensor signal and signally coupled the model-database 330 for providing the determination model. The computing unit 340 is additionally coupled to the interface 325 for providing the plurality of parameters respectively and the uncertainty range for each of the plurality of parameters by means of the handheld device 320. By means of the computing unit 340, the model-based measuring device 300 is configured to determine an uncertainty range of a measurement value of the model-based measuring device, particularly based on the method for determining an uncertainty range of the measurement value as described with figure 2. The model-based measuring device can be configured by means of the interface 325 to provide the measurement value and/or the uncertainty range of the measurement value to the handheld device 320. The measuring device 300 can be configured to receive the specific measurement application of the model-based measuring device 300 by means of the handheld device 320 and the interface 325. The sensor signal can comprise a surface temperature of a wall of a vessel and the measuring device can be configured to determine the measurement value of a temperature of a medium inside of the vessel.

**Claims**

1. Method for determining an uncertainty range for a measurement value of a model-based measuring device (300), comprising:

   providing values of a plurality of parameters of a determination model of the model-based measuring device (300) for a specific measurement application of the measurement device (300) (S1);
   providing an uncertainty range for at least one of the plurality of parameters (S2);
   providing a sensor signal, which is detected according to the specific measurement application, for determining the measurement value (S3);
   determining the uncertainty range (S4) of the measurement value for the specific application of the measurement device (300) based on the determination-model, the sensor signal, the values of the plurality of parameters of the determination model, and the uncertainty range for at least one of the plurality of parameters of the determination model.

2. The method according to claim 1, further comprising:
   determining the measurement value of the model-based measurement device (300), based on the sensor signal, the determination-model, and the values of the plurality of parameters of the determination model for the specific measurement application.

3. The method according to claim 1 or 2, further comprising:
   detecting a temperature value of an environment of the measuring device by means of an environment temperature sensor of the measuring device (300) for determining the uncertainty range of the measurement value.

4. The method according to any one of the preceding claims, wherein the determination model establishes a relationship between the measurement value to be determined and the detected sensor signal for determining the measurement value.

5. The method according to any one of the preceding claims, wherein the uncertainty range of the measurement value is determined based on an error estimation model and the determination model for the specific measurement application.

6. The method according to any one of the preceding claims, wherein at least one of the values of the plurality of parameters is provided by a parameter-database (330); the parameter-database (330) comprising values of the plurality of parameters, which are assigned to specific measurement applications; and wherein particularly the measuring device comprises the parameter-database (330) and/or the measuring device (300) is configured to access the parameter-database (330) by means of an Internet-coupling and/or a local network-coupling.

7. The method according to any one of the preceding claims, wherein the uncertainty range of at least one of the plurality of parameters of a specific application of the measurement device is provided by the parameter-database (330); the parameter-database (330) comprising an estimated uncertainty range for at least one of the plurality of parameters of a specific application of the measuring device (330).

8. The method according to any one of the preceding claims, wherein the measurement value is a temperature value of a medium inside a vessel, and particularly the sensor signal is based on a surface temperature of the vessel.

9. The method according to claim 7, wherein the plurality of parameters include a thermal resistance of a boundary layer of the medium inside the vessel and/or a thermal resistance of the pipe wall and/or the thermal resistance of an insulation layer of the vessel and/or a convective heat transfer from an outside of the thermal insulation of the vessel to an environment medium and/or a conductive heat transfer from the outside insulation surface of the vessel to the environment medium and/or a radiative heat transfer from the outside insulation surface of the vessel to an environment of the insolation.

10. A model-based measuring device (300) for determining a measurement value, comprising:

a sensor unit (310) for detecting a sensor signal for determining the measurement value, which is detected according to a specific measurement application;
a model-database (330) and/or a first interface for providing a determination model comprising a plurality of parameters according to the specific measurement application of the model-based measuring device (300);
a second interface (325) and/or a parameter-database for providing values of the plurality of parameters and an uncertainty range for each of the plurality of parameters of the specific application of the model-based measuring device (300) according to the specific measurement application for the determination model; and
a computing unit (340) signally coupled to the sensor unit (310) for providing the sensor signal; and the model-database (330) and/or parameter-database and/or the first interface (325) and/or the second interface for providing the determination model and the plurality of parameters respectively and the uncertainty range for each of the plurality of parameters;
wherein the model-based measuring device (300) is configured to determine an uncertainty range of a measurement value of the model-based measuring device (300).

11. The model-based measuring device (300) according to claim 10, wherein the uncertainty range of the measurement value of the model-based measuring device (300) is determined according to any one of the claims 1 to 9.

12. The model-based measuring device (300) according to claim 10 or 11, configured to determine the measurement value; and particularly the measuring device comprising an output-interface for providing the measurement value and/or the uncertainty range of the measurement value.

13. The model-based measuring device (300) according to any one claims 10 to 12, which is configured to determine the plurality of parameters based on the specific measurement application of the model-based measuring device (300), which is provided by an input-interface of the measuring device (300).

14. The model-based measuring device (300) according to claim 10 to 13, wherein the sensor signal comprises a surface temperature of a wall of a vessel (110) and the measuring device (300) is configured to determine the measurement value of a temperature of a medium inside of the vessel (115).

15. Use of a model-based measuring device (300) according to claim 10 to 14, for determining a temperature of a medium inside of a vessel (115) and an uncertainty range of the determined temperature of the medium (120) inside of the vessel (115).

Fig. 1

Fig. 2

Fig. 3

**Europäisches Patentamt**
**European Patent Office**
**Office européen des brevets**

# EUROPEAN SEARCH REPORT

Application Number

EP 23 18 6741

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GEBHARDT JÖRG ET AL: "Non-invasive temperature measurement of turbulent flows of aqueous solutions and gases in pipes", TM – TECHNISCHES MESSEN/PLATTFORM FÜR METHODEN, SYSTEME UND ANWENDUNGEN DER MESSTECHNIK, [Online] vol. 87, no. 9, 25 September 2020 (2020-09-25), pages 553-563, XP055806729, DE ISSN: 0171-8096, DOI: 10.1515/teme-2020-0028 Retrieved from the Internet: URL:http://dx.doi.org/10.1515/teme-2020-0028> [retrieved on 2024-03-04] * paragraph [03.1]; figure 1; table 1 * | 1-15 | INV. G01K7/42 G01K15/00 G01K13/02 G01K1/143 |
| A | EP 4 009 022 A1 (ABB SCHWEIZ AG [CH]) 8 June 2022 (2022-06-08) * paragraph [0080] – paragraph [0084]; figures 1-3 * | 1-15 | |
| A | Anonymous: "JCGM 100:2008 Evaluation of measurement data – Guide to the expression of uncertainty in measurement", , 1 January 2008 (2008-01-01), XP055714067, Retrieved from the Internet: URL:https://www.bipm.org/utils/common/documents/jcgm/JCGM_100_2008_E.pdf [retrieved on 2020-07-13] * the whole document * | 1-15 | TECHNICAL FIELDS SEARCHED (IPC) G01K |
| A | US 2011/133939 A1 (RANGANATHAN SRIDHAR [US] ET AL) 9 June 2011 (2011-06-09) * paragraph [0069] – paragraph [0075]; figure 7 * | 1-15 | |

The present search report has been drawn up for all claims

| Place of search | Date of completion of the search | Examiner |
|---|---|---|
| The Hague | 7 March 2024 | Rosello Garcia, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 18 6741

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2024

| Patent document cited in search report | | Publication date | Patent family member(s) | | Publication date |
|---|---|---|---|---|---|
| EP 4009022 | A1 | 08-06-2022 | CN | 116569009 A | 08-08-2023 |
| | | | EP | 4009022 A1 | 08-06-2022 |
| | | | US | 2023314241 A1 | 05-10-2023 |
| | | | WO | 2022117831 A1 | 09-06-2022 |
| US 2011133939 | A1 | 09-06-2011 | NONE | | |

EPO FORM P0459

For more details about this annex : see Official Journal of the European Patent Office, No. 12/82